# EUROPEAN PATENT SPECIFICATION

(11) **EP 2 035 684 B1**
(45) Date of publication and mention of the grant of the patent: **10.11.2010**
(21) Application number: 07747546.5
(22) Date of filing: 02.07.2007
(51) Int. Cl.: F02M 37/10, B60K 15/03

(54) **BUFFER VESSEL**
PUFFERBEHÄLTER
RÉCIPIENT TAMPON

(30) Priority: 03.07.2006 NL 2000122
(43) Date of publication of application: 18.03.2009
(73) Proprietor: Vialle Alternative Fuel Systems B.V., 5626 EA Eindhoven (NL)
(72) Inventor: TEN BROEKE, Sebastiaan Martinus Emanuel, 5492 NC Nijnsel (NL); VAN EIJCK, Petrus Maria, 5575 CA Luyksgestel (NL); GROEN, Leendert Rens, 5709 MN Helmond (NL); TANKENS, Cornelis Hendrik, 4281 KE Andel (NL); BEEM, Bob Alexander, 5709 ME Helmond (NL); JAASMA, Servatius Alfons Maria, 5627 TE Eindhoven (NL)
(74) Representative: Ketelaars, Maarten F.J.M.
(86) International application number: PCT/NL2007/050324
(87) International publication number: WO 2008/004865

(56) References cited:
- EP-A2- 1 447 556
- WO-A-98/20247
- JP-A- 6 299 922
- US-A- 5 038 741

## Description

The present invention relates to a buffer vessel for a pump to be fitted in a pressure vessel for vapour which is liquid under pressure, said buffer vessel comprising a bottom having an inlet for vapour which is liquid under pressure, a peripheral wall adjoining the bottom for delimiting a buffer, a mounting for a pump and attachment means for attachment to a pressure vessel.

Such a buffer vessel is known from WO 98/20247 in the name of Vialle Beheer B.V. which describes a fuel tank for a liquefied gas, such as LPG, in which an opening has been provided in the tank for receiving an accessories plate. On the accessories plate, a structure is provided which consists of a fuel pump accommodated inside a buffer. This buffer is moved into a certain position with respect to the accessories plate by means of spacers, such as silent blocks. Therein, the length of the spacers is chosen such that the underside of the buffer is always as close as possible to the underside of the tank in order to be able to empty the latter as often as possible.

This buffer is embodied as a bellows which rests on the bottom of the tank on a number of legs.

It is important that the tank is emptied as much as possible in order to use the volume of the tank as efficiently as possible. In addition, with applications in vehicles and more particularly with applications where two fuels are used for propulsion, it is becoming increasingly important that the switch-over moment can be determined accurately. With certain applications, the switch-over in principle takes place automatically and therein it is important that the tank can reliably supply an optimum amount of fuel.

It is an object of the present invention to provide a buffer vessel which makes it possible to use the volume of a tank in an optimum manner.

This object is achieved in an above-described buffer vessel in that the bottom and peripheral wall of the buffer vessel are embodied in such a manner that this bottom is elastically deformable in order to adapt to the shape of the boundary of this pressure vessel.

According to the present invention, the bottom is elastically deformable. That is to say that the bottom of the buffer vessel adapts to the shape of the bottom of the tank. As the tank is a pressure vessel, it will often be of a slightly curved shape. As has now been found, an unnecessarily large volume is lost by placing a flat bottom of the buffer vessel therein. By now adapting the bottom of the buffer vessel to the shape of the bottom of the vessel, the volume of the pressure vessel can be used more efficiently. All this is entirely reproducible.

Due to the fact that, in addition, the bottom of the buffer vessel adjoins the bottom of the pressure vessel more effectively, movements between the two which might lead to vibrations, noises and the like can be prevented.

According to an advantageous embodiment of the invention, the bottom is made from a rubber-like material which is designed to be flexible under pressure. More particularly, the rubber-like material comprises a nitrile rubber.

According to a further advantageous embodiment of the invention, the bottom of the buffer vessel is provided with three or more legs which, during use, rest on the bottom of the pressure vessel.

Although the pump may be attached outside the buffer vessel, it is preferred if the former is fitted in an accommodation in the buffer vessel. This results in a compact unit which can be handled in a simple manner and facilitates assembly of the structure.

The buffer vessel is embodied for containing the relevant fluid therein and for compensating for temporary variations in the fluid level inside the pressure vessel, as occur, for example, when a vehicle provided with the pressure vessel negotiates a bend. Preferably, a filter is provided on the inlet of the buffer vessel which is near the bottom of the pressure vessel. If desired, it is also possible to provide a filter downstream of the fuel pump. Of course, it is possible to provide several filters.

According to a particular embodiment of the invention, the attachment means for the buffer vessel are spring-loaded attachment means which force the buffer vessel in the direction of the bottom of the tank and deform the bottom of the buffer vessel upon contact therewith in the above-described manner. Preferably, the bottom and the peripheral wall of the buffer vessel are made from the same material.

Preferably, the above-described buffer vessel is used in combination with a fuel pump and this unit is combined with an accessories plate which can be introduced into a pressure vessel through an opening.

The invention will be described below in more detail with reference to an exemplary embodiment which is illustrated in the drawing, in which:
Fig. 1 diagrammatically shows a pressure vessel provided with the buffer vessel according to the invention;
Fig. 2 diagrammatically shows details of the buffer vessel in combination with an accessories plate fitted in a pressure vessel; and
Fig. 3 shows various relevant parts contained in the buffer vessel in exploded view.

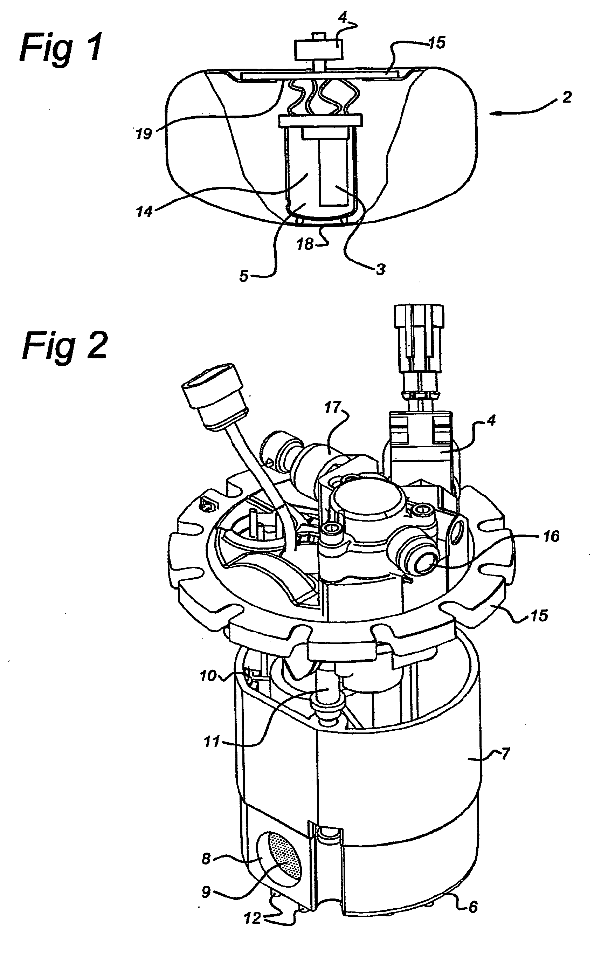

In Fig. 1, reference numeral 2 denotes a pressure vessel for a gas which is liquid under pressure, such as LPG, propane, etc. This pressure vessel comprises a buffer vessel 5 according to the present invention, which receives a fuel pump 3 which is connected to an accessories plate 15 via a duct 14.

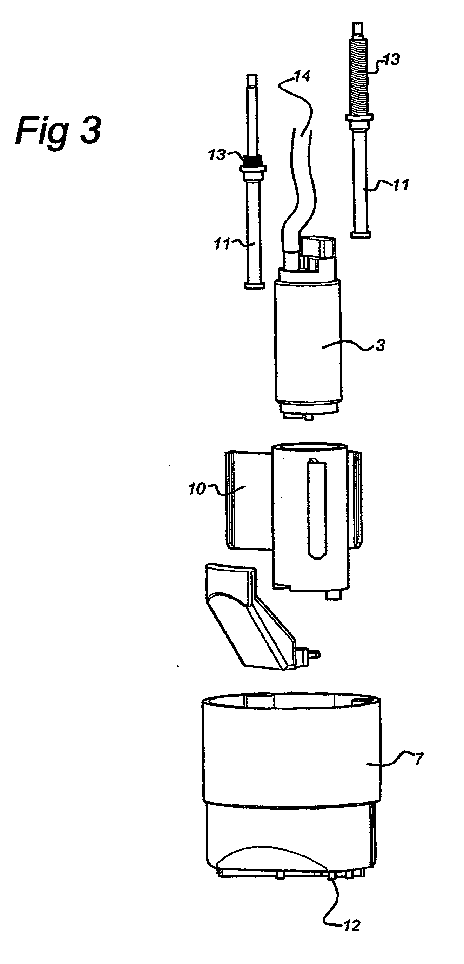

As can be seen in Figs 2 and 3, the buffer vessel 5 comprises a bottom 6 and an adjoining wall 7. The bottom 6 contains an inlet opening 8 to which a one-way valve 9 is connected in such a manner that liquid can flow into the buffer vessel via opening 8, but cannot flow out, as a result of which the buffer vessel will not empty when a vehicle travels through a bend or the like. The buffer vessel contains the fuel pump 3 which is accommodated in an attachment block 10 which is securely held in the buffer vessel in an accommodation.

Two attachment pins 11 are provided which are spring-loaded due to the presence of a spring 13 and extend between the accessories plate 15 and the buffer vessel and are embodied to push the buffer vessel 5 against the bottom 18 of the tank.

The bottom 6 of the buffer vessel is provided with three legs 12.

The accessories plate 15 is provided with a shut-off valve 4 which operates between the duct 14 and the discharge opening 16 for product which has been pumped by the pump. Reference numeral 17 denotes a fill opening.

Both the bottom 6 and the peripheral wall 7 are made of an elastically deformable material, such as a nitrile rubber.

The structure, comprising pressure vessel 2 and buffer vessel 5, is assembled by introducing the accessories plate, attachment pins and buffer vessel incorporating the connected fuel pump 3 as a unit into an opening 19 in the fuel vessel. Therein, the length of the attachment pins 11 is chosen such that the bottom 6 of the buffer vessel 5 already touches the bottom 18 of the pressure vessel when the accessories plate 15 is secured to the outside of the pressure vessel. By placing the accessories plate 15 against the pressure vessel 2 and attaching it thereto, the bottom 6 will elastically deform as a result of the pressure of springs 13 of attachment pins 11, as is shown in Fig. 2. This means that the bottom adapts to the shape of the underside of the fuel tank, as a result of which the inlet opening 8 ends up in an optimum low position in the tank and the volume of the latter can be used to an optimum degree. This inlet opening can also be provided in the bottom 6 of the buffer vessel 5. In addition, the positioning of the buffer vessel with respect to the pressure vessel 2 is optimized by at least two of the three legs 12 acting on the bottom 18 of the pressure vessel. By using rubber material, the noise generated by the pump is attenuated as much as possible. Further measures may be taken in order to attenuate the noise of the pump as much as possible. These may comprise, inter alia, making the attachment block 10 from rubber or another sound-insulating material. Also, the latter may be produced integrally with the remainder of the wall 7.

After reading the above, those skilled in the art will immediately be able to think of variants of the inventive idea, which variants are obvious after reading the above description and are covered by the scope of the appended claims, in which rights are expressly requested for the subject matter defined in the subclaims independent of the main claim.

## Claims

1. Buffer vessel (5) for a pump (3) to be fitted in a pressure vessel (2) for vapour which is liquid under pressure, said buffer vessel comprising a bottom (6) having an inlet (8) for vapour which is liquid under pressure, a peripheral wall (7) adjoining the bottom for delimiting a buffer, a mounting (10) for a pump and attachment means (11) for attachment to a pressure vessel, **characterized in that** the bottom (6) and peripheral wall (7) of the buffer vessel are embodied in such that this bottom (6) is elastically deformable in order to adapt to the shape of the boundary of this pressure vessel.

2. Buffer vessel according to Claim 1, in which said bottom is made from rubber-like material.

3. Buffer vessel according to Claim 2, in which said rubber-like material comprises a nitrile rubber.

4. Buffer vessel according to one of the preceding claims, in which said attachment comprises a clamping part for the pump, which clamping part is integrally formed with the peripheral wall.

5. Buffer vessel according to one of the preceding claims, in which said bottom comprises three legs (12).

6. Buffer vessel according to one of the preceding claims, in which said mounting of said pump comprises an accommodation space in said buffer vessel.

7. Buffer vessel according to one of the preceding claims, in which a filter (9) is provided on the inlet (8) of the buffer vessel.

8. Buffer vessel according to one of the preceding claims, in which said attachment means (11) comprise spring-mounted attachment means which are designed to push the bottom (6) of said buffer vessel away.

9. Buffer vessel according to one of the preceding claims, in which said bottom (6) and said peripheral wall (7) are made from the same material.

10. Pressure vessel assembly for fuel which is liquid under pressure, comprising a buffer vessel (5) according to one of the preceding claims, a pump (3) fitted therein (3) and a flexible duct (14) connecting the pump and a discharge opening (16) of the vessel.

11. Assembly according to Claim 10, in which said discharge opening (16) is provided in an accessories plate (15), which accessories plate comprises a refill opening (17).

## Patentansprüche

1. Pufferbehälter (5) für eine Pumpe (3) zur Einpassung in ein Druckgefäß (2) für Dampf, der unter Druck flüssig ist, wobei der Pufferbehälter einen Boden (6) mit einem Einlass (8) für Dampf, der unter Druck flüssig ist, eine Umfangswand (7), die zum Abgrenzen eines Puffers an den Boden angrenzt, eine Halterung (10) für eine Pumpe und Befestigungsmittel (11) zur Befestigung an einem Druckbehälter aufweist, **dadurch gekennzeichnet, dass** der Boden (6) und die Umfangswand (7) des Pufferbehälters derart ausgeführt sind, dass dieser Boden (6) elastisch verformbar ist, um sich der Form der Begrenzung dieses Druckbehälters anzupassen.

2. Pufferbehälter nach Anspruch 1, bei dem der Boden aus einem gummiartigen Material hergestellt ist.

3. Pufferbehälter nach Anspruch 2, bei dem das gummiartige Material einen Nitrilkautschuk umfasst.

4. Pufferbehälter nach einem der vorhergehenden Ansprüche, bei dem die Befestigung ein Einspannteil für die Pumpe umfasst, wobei das Einspannteil integral mit der Umfangswand gebildet ist.

5. Pufferbehälter nach einem der vorhergehenden Ansprüche, bei dem der Boden drei Füße (12) umfasst.

6. Pufferbehälter nach einem der vorhergehenden Ansprüche, bei dem die Halterung der Pumpe einen Aufnahmeraum in dem Pufferbehälter umfasst.

7. Pufferbehälter nach einem der vorhergehenden Ansprüche, bei dem ein Filter (9) am Einlass (8) des Pufferbehälters vorgesehen ist.

8. Pufferbehälter nach einem der vorhergehenden Ansprüche, bei dem die Befestigungsmittel (11) gefederte Befestigungsmittel umfassen, die so ausgebildet sind, dass sie den Boden (6) des Pufferbehälters wegstoßen.

9. Pufferbehälter nach einem der vorhergehenden Ansprüche, bei dem der Boden (6) und die Umfangswand (7) aus dem gleichen Material hergestellt sind.

10. Druckbehälteranordnung für Treibstoff, der unter Druck flüssig ist, umfassend einen Pufferbehälter (5) nach einem der vorstehenden Ansprüche, eine Pumpe (3), die darin eingepasst ist, und eine flexible Röhrenleitung (14), die die Pumpe und eine Ausstoßöffnung (16) des Behälters verbindet.

11. Anordnung nach Anspruch 10, in der die Ausstoßöffnung (16) in einer Zubehörplatte (15) vorgesehen ist, wobei die Zubehörplatte eine Nachfüllöffnung (17) umfasst.

## Revendications

1. Récipient tampon (5) pour une pomme (3) à monter dans une cuve de pression (2) pour la vapeur qui est liquide sous pression, ledit récipient tampon comprenant un fond (6) ayant une entrée (8) pour la vapeur qui est liquide sous pression, une paroi périphérique (7) adjacente au fond pour délimiter un tampon, un montage (10) pour une pompe et des moyens de fixation (11) pour la fixation à une cuve de pression, **caractérisé en ce que** le fond (6) et la paroi périphérique (7) du récipient tampon sont incorporés de telle sorte que ce fond (6) est élastiquement déformable pour s'adapter à la forme de la limite de cette cuve de pression.

2. Récipient tampon selon la revendication 1, dans lequel ledit fond est réalisé en un matériau semblable à du caoutchouc.

3. Récipient tampon selon la revendication 2, dans lequel ledit matériau semblable à du caoutchouc comprend un caoutchouc nitrile.

4. Récipient tampon selon l'une quelconque des revendications précédentes, dans lequel ladite fixation comprend une partie de serrage pour la pompe, ladite partie de serrage est réalisée intégralement avec la paroi périphérique.

5. Récipient tampon selon l'une des revendications précédentes, dans lequel ledit fond comprend trois branches (12).

6. Récipient tampon selon l'une des revendications précédentes, dans lequel ledit montage de ladite pompe comprend un espace de réception dans ledit récipient tampon.

7. Récipient tampon selon l'une des revendications précédentes, dans lequel un filtre (9) est réalisé sur l'entrée (8) du récipient tampon.

8. Récipient tampon selon l'une des revendications précédentes, dans lequel lesdits moyens de fixation (11) comprennent des moyens de fixation à ressort qui sont conçus pour repousser le fond (6) dudit récipient tampon.

9. Récipient tampon selon l'une des revendications précédentes, dans lequel ledit fond (6) et ladite paroi périphérique (7) sont réalisés dans le même matériau.

10. Ensemble de cuve de pression pour du combustible qui est liquide sous pression, comprenant un récipient tampon (5) selon l'une quelconque des revendications précédentes, une pompe (3) installée dans celui-ci (3) et une conduite flexible (14) reliant la pompe et une ouverture d'évacuation (16) du récipient.

11. Ensemble selon la revendication 10, dans lequel ladite ouverture d'évacuation (16) est ménagée dans une plaque d'accessoires (15), ladite plaque d'accessoires comprend une ouverture de réalimentation (17).
